(19) Europäisches Patentamt / European Patent Office / Office européen des brevets

(11) **EP 3 732 698 B1**

(12) **EUROPEAN PATENT SPECIFICATION**

(45) Date of publication and mention
of the grant of the patent:
**09.07.2025 Bulletin 2025/28**

(21) Application number: **17935870.0**

(22) Date of filing: **25.12.2017**

(51) International Patent Classification (IPC):
**H01G 4/18** *(2006.01)* **B29C 55/12** *(2006.01)*
**H01G 4/32** *(2006.01)*

(52) Cooperative Patent Classification (CPC):
**H01G 4/18; B29C 55/12; H01G 4/32**

(86) International application number:
**PCT/CN2017/118282**

(87) International publication number:
**WO 2019/126937 (04.07.2019 Gazette 2019/27)**

(54) **BIAXIALLY ORIENTED POLYPROPYLENE FILM, POWER CAPACITOR, AND ASSOCIATED MANUFACTURING METHOD AND SYSTEM**

**BIAXIAL ORIENTIERTE POLYPROPYLENFOLIE, LEISTUNGSKONDENSATOR UND ZUGEHÖRIGES HERSTELLUNGSVERFAHREN UND SYSTEM**

**FILM DE POLYPROPYLÈNE À ORIENTATION BIAXIALE, CONDENSATEUR DE PUISSANCE, ET PROCÉDÉ ET SYSTÈME DE FABRICATION ASSOCIÉS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2020 Bulletin 2020/45**

(73) Proprietor: **Hitachi Energy Ltd**
**8050 Zürich (CH)**

(72) Inventors:
• **LI, Nan**
**Beijing 102218 (CN)**
• **GUAN, Yu**
**Shanghai 200335 (CN)**
• **QI, Lejun**
**Beijing 100012 (CN)**
• **CHEN, Jiansheng**
**Beijing 100024 (CN)**

(74) Representative: **Michalski Hüttermann & Partner Patentanwälte mbB**
**Kaistraße 16A**
**40221 Düsseldorf (DE)**

(56) References cited:
| EP-A1- 2 410 539 | EP-B1- 2 410 539 |
| CN-A- 102 356 439 | CN-A- 103 819 816 |
| FR-A1- 2 511 692 | JP-A- 2006 063 186 |
| JP-A- 2010 219 329 | JP-A- H1 095 456 |
| JP-A- S5 968 919 | JP-B2- 3 901 916 |

**Description**

FIELD

Embodiments of the present disclosure generally relate to the field of electrical power, and in particular, to a biaxially oriented polypropylene (BOPP) film, a power capacitor, a method and system for manufacturing the same.

BACKGROUND

BOPP films have been widely used in applications of high voltage insulation in power capacitors. The electrical breakdown of a dielectric film of the capacitor is irreversible, thus it is important that high dielectric performance is guaranteed. The dielectric performance of BOPP film is mainly determined by its crystallite structure and crystallinity. More specifically, a uniform distributed crystallite with high crystallinity generally leads to high dielectric performance. The molecular weight distribution (MWD) of BOPP film plays an important role in the crystallite structure, and a narrower NWD tends to generate uniform crystallite and high crystallinity.

EP 2410539 A1 describes a polypropylene for a film capacitor or a polypropylene sheet for a film capacitor which exhibits excellent stretchability when stretched into a film and provides a film having high breakdown voltage and small thermal shrinkage ratio.

JP 2010219329 A describes a method of manufacturing a polypropylene film for film capacitors including a process for manufacturing a propylene homopolymer, where a melt flow rate (MFR) measured with a load of 2.16 kg at 230°C conforming to ASTM D1238 is within a range of 1-10g/10 minutes.

JPS 5968919 A describes a capacitor comprising a capacitor element in which a dielectric layer of a film is laminated between electrode foils and wound.

FR 2511692 A1 describes that a polypropylene film can be produced with a structured surface by first subjecting a surface of the (thicker) film to electron irradiation and then permanently stretching the film biaxially, so that static irregularities are produced on the irradiated surface.

At present, the raw material of polypropylene (PP) used to produce BOPP film has generally a broad molecular weight distribution. The broad MWD is important for the fabrication of BOPP film, indicating that PP components of both high molecular weight (MW) and low molecular weight are required. The component of low MW endows polymer melt with a good flowing property for the extrusion process, while the component of high MW provides adequate melt strength to ensure the stability of film formation. However, for the well-prepared BOPP film, the broad NWD is unfavorable to generate uniform crystallite and high crystallinity, as it would hinder the molecular chains from regularly arranging into crystal lattice.

Accordingly, there is a need for modifying the molecular weight distribution, and improving the crystallites structure and crystallinity of BOPP film.

SUMMARY

The invention is defined by the features of the independent claims. Embodiments of the invention are set forth with the appended dependent claims.

In general, example embodiments of the present disclosure provide a biaxially oriented polypropylene film, a power capacitor, and associated methods.

In a first aspect, there is provided a biaxially oriented polypropylene film for use in a power capacitor. The biaxially oriented polypropylene film has a reduced molecular weight distribution in a range of 1.5 to 4 as a result of a radiation treatment.

In some embodiments, the power capacitor is of an oil-immersed capacitor.

In some embodiments, the power capacitor is of a dry-type metalized film capacitor; and the power capacitor is further obtained as a result of metalizing treatment before or after the radiation treatment.

In some embodiments, the radiation treatment uses radiation source as of an electron beam source or a gamma ray source.

In some embodiments, the molecular weight distribution of the biaxially oriented polypropylene film is in a range of 2 to 4.

In some embodiments, a dosage of the radiation treatment is in a range of 1kGy to 300kGy, preferably 10kGy to 100kGy.

In some embodiments, the biaxially oriented polypropylene film is obtained by biaxially stretching a polypropylene layer before the radiation treatment.

In a second aspect, there is provided a power capacitor. The power capacitor comprises the biaxially oriented polypropylene film of the first aspect.

In a third aspect, there is provided a method for processing a biaxially oriented polypropylene film for use in a power capacitor. The method comprises treating the biaxially oriented polypropylene film by radiation so as to reduce a molecular weight distribution of the biaxially oriented polypropylene film into a range of 1.5 to 4.

In some embodiments, the power capacitor is of an oil-immersed capacitor.

In some embodiments, the power capacitor is of a dry-type metalized film capacitor; and the method further comprises: metalizing the biaxially oriented polypropylene film before or after the radiation treatment.

In some embodiments, the radiation treatment uses radiation source as of an electron beam source or a gamma ray source.

In some embodiments, the molecular weight distribution of the biaxially oriented polypropylene film is in a range of 2 to 4.

In some embodiments, a dosage of the radiation treatment is in a range of 1kGy to 300kGy, preferably 10kGy to 100kGy.

In some embodiments, bi-axially stretching a polypropylene layer before the radiation treatment.

In a fourth aspect, there is provided a manufacturing method. The manufacturing method comprises the method for processing the biaxially oriented polypropylene film of the third aspect and winding up the radiation-treated biaxially oriented polypropylene film into a shape of roll. A radiation source of the radiation treatment is configured to move substantially parallel to an axial direction of the winding.

In a fifth aspect, there is provide a system for processing a biaxially oriented polypropylene film for use in a power capacitor. The system comprises a radiation source configured to treat the biaxially oriented polypropylene film by radiation so as to reduce a molecular weight distribution of the biaxially oriented polypropylene film into a range of 1.5 to 4.

In some embodiments, the power capacitor is of an oil-immersed capacitor.

In some embodiments, the power capacitor is of a dry-type metalized film capacitor; and the system further comprises: a metallization device configured to metalize the biaxially oriented polypropylene film before or after the radiation treatment.

In some embodiments, the radiation source is an electron beam source or a gamma ray source.

In some embodiments, the molecular weight distribution of the biaxially oriented polypropylene film is in the range of 2 to 4.

In some embodiments, a dosage of the radiation treatment is in a range of 1kGy to 300kGy, preferably 10kGy to 100kGy.

In some embodiments, the system further comprises a stretching device configured to bi-axially stretch a polypropylene layer before the radiation treatment.

In a sixth aspect, there is provided a manufacturing system. The manufacturing system comprises the system for processing the biaxially oriented polypropylene film according to the fifth aspect; and at least one roller configured to wind up the radiation-treated biaxially oriented polypropylene film into a shape of roll; wherein the radiation source is configured to move substantially parallel to an axial direction of the at least one roller.

Features of the present invention as set forth with the appended claims will become easily comprehensible through the following description.

BRIEF DESCRIPTION OF THE DRAWINGS

Through the more detailed description of some embodiments of the present disclosure in the accompanying drawings, the above and other objects, features and advantages of the present disclosure will become more apparent, wherein:

FIG. 1 is a flow chart illustrating a method for processing a BOPP film for use in a capacitor in accordance with embodiments of the present disclosure;
FIG. 2A and 2B are schematic diagrams illustrating a manufacturing system in accordance with embodiments of the present disclosure;
FIG. 3 is a flow chart illustrating a manufacturing method in accordance with embodiments of the present disclosure;
FIG. 4 is a schematic diagram illustrating a holder of the roll of BOPP film; and
FIG. 5 is a schematic diagram illustrating an arrangement of the rolls of BOPP film.

Throughout the drawings, the same or similar reference numerals represent the same or similar element.

DETAILED DESCRIPTION

Principle of the present disclosure will now be described with reference to some example embodiments. It is to be understood that these embodiments are described only for the purpose of illustration and help those skilled in the art to understand and implement the present invention as set forth with the appended claims. The disclosure described herein can be implemented in various manners other than the ones describe below.

As used herein, the term "includes" and its variants are to be read as open terms that mean "includes, but is not limited to." The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

## 1. Discovery and Principle

It is well known in the art that radiation process radiation process can induce the crosslinking or degradation of polypropylene, depending on whether effective crosslinking agent is present or not. Without crosslinking agent, the polypropylene may be radiation-treated for trash recycling. However, the inventors discovered that the radiation processing exhibits a significant effect on enhancing the dielectric strength of BOPP film, which may be used for both oil-impregnated capacitor and metalized-film capacitor. The BOPP film has demonstrated an outstanding insulating property used for power capacitor.

The radiation-induced narrower NWD that leads to the dielectric strength improvement. As far as the crystallization kinetics is concerned, a narrower MW distribution facilitates the crystallization process, as uniform and regular polymer chains can arrange into crystal lattice more easily. The electrical breakdown tends to occur in the amorphous regions in BOPP film. Therefore the increase in crystalline region will benefit to the dielectric strength improvement.

## 2. Process and Device

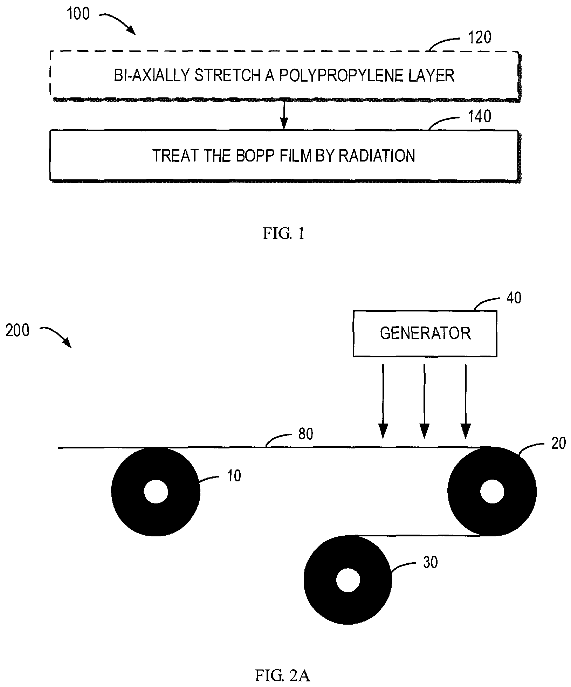

FIG. 1 is a flow chart illustrating a method 100 for processing a BOPP film for use in a power capacitor in accordance with embodiments of the present disclosure.

In some embodiments, at block 120, the BOPP film may be obtained by bi-axially stretching a polypropylene layer. The block 120 may be implemented by a stretching device. In this way, the method 100 may be incorporated to a production line for manufacturing BOPP film. For example, the polypropylene layer may be formed by casting, calendaring, or hot-pressing a raw polypropylene material. It is to be understood that the block 120 is optional and can be omitted in some implementations. For example, the BOPP film may be commercially available.

At block 140, the BOPP film is treated by radiation such that a molecular weight distribution of the BOPP film can be reduced to a range of 1.5 to 4, preferably of 2 to 4. The radiation processing may result in scission of polymer chains, and then crystallite reorganization by the broken chains occurs. As a result, the crystallite reorganization leads to a crystallinity increase and morphology perfection, which further induces an increased dielectric strength.

At block 140, an electron beam source or a gamma ray source may be used as the radiation source. For example, the electron beam source may include a high power electron generator. The gamma ray source may be a Co-60 source, for example. The dosage of the radiation treatment may be in a range of 1kGy to 300kGy, preferably 10kGy to 100kGy.

The power capacitor may be an oil-immersed capacitor or oil-impregnated capacitor. For example, the BOPP film may be a rough BOPP film. The power capacitor may also be a dry-type metalized film capacitor. For example, the BOPP film may be a smooth BOPP film. The method 100 may further comprise metalizing the biaxially oriented polypropylene film before or after the radiation treatment. The metallization may be achieved by any method currently known or to be developed in the further, for example, plating, coating, and/or the like.

The BOPP film may have a shape of roll and the radiation treatment may be implemented on the roll. However, due to the limited penetration depth of radiation source, especially electron beam, the radiation treatment may result in a non-uniform improvement in the dielectric performance of the BOPP film. Accordingly, embodiments of the present disclose provide a manufacturing method and system for improving the uniformity of radiation treatment.

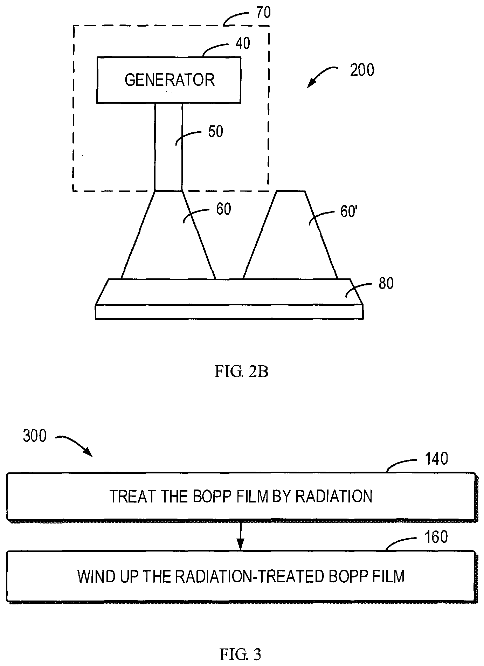

FIG. 2A is a schematic diagram illustrating a side view of a manufacturing system 200 in accordance with embodiments of the present disclosure, and FIG. 2B is a schematic diagram illustrating another view of the manufacturing system 200 seen from left side of FIG. 2A. The manufacturing system 200 includes a radiation source 70 that generates and emits a radiation, for example, a high energy radiation such as an electron beam radiation or a gamma ray radiation. FIGS. 2A and 2B will now be described with reference to an electron beam radiation and it is to be understood that any other suitable radiation source may be used instead.

The BOPP film 80 is transferred from a first roller 10, a second roller 20, and winded up by a third roller 30 to a shape of a roll. During this process, a layer of the BOPP film 80 is treated by the radiation from the radiation source 70. The radiation treatment may be performed on thin BOPP film (for example a single layer) such that the radiation effect will not be affected by the limited penetrating depth of the electron beam. The radiation source 70 may be configured such that the radiation can move substantially parallel to the axial direction of the roller 130, as shown in FIG. 2B. The movement of the electron beam enables the radiation on a broad width of BOPP film, for example, 5-8 meters. In this way, the manufacturing system 200 can be easily incorporated into a commercial production line. For example, the BOPP film 80 may be biaxially stretched upstream in the production line.

As shown in FIG. 2B, the radiation source 70 may include a high voltage generator 40 and a cathode accelerator tube 50. For example, the cathode accelerator tube 50 may generate a fan-shaped electron beam 60. The generation of fan-shaped beam may facilitate a uniform radiation of the radiation. The cathode accelerator tube 50 may be configured to move substantially parallel to the axial direction of the roller 130, as shown in FIG. 2B. For example, the fan-shaped electron beam 60 may be moved to a new location as indicated by the fan-shaped electron beam 60'. The high voltage generator 40 can generate an electron beam with beam energy up to 300 keV to provide a radiation dosage in a range of 1 kGy-300 kGy, preferably 10 kGy-100 kGy on the BOPP film 80.

FIG. 3 is a flow chart illustrating a manufacturing method 300 in accordance with embodiments of the present disclosure. The method 300 may be implemented by the manufacturing system 200. At block 140, the BOPP film may be treated by radiation as described above with reference to FIG. 1.

At block 160, the radiation-treated BOPP film is winded up into a shape of roll. The radiation source of the radiation treatment is configured to move substantially parallel to an axial direction of the winding.

3. Detailed Examples and Experiments

Some detailed examples and experimental results will now be described. It is to be understood that the examples are described only for the purpose of illustration without suggesting any limitations as to the scope of the present disclosure.

At present, there are mainly two types of ionizing radiation sources in industrial applications, i.e. electron beam and gamma-ray (Co-60). Both electron beam and gamma-ray have their benefits and drawbacks for modifying BOPP film, which have been summarized in Table 1.

Table 1. Electron beam vs Gamma-ray

| Radiation source | Benefits | Drawbacks |
|---|---|---|
| electron beam | High radiation efficiency (radiation rate: >5 kGy/hr) | Limited penetration depth in roll film ($\leq$ 5 cm) |
| | Easy implematation of online radiation | |
| Gamma-ray (Co-60) | Large penetration depth for roll film ($\geq$ 60 cm) | Low radiation efficiency (radiation rate: 10-30 kGy/day) |
| | | Difficult implematation of online radiation |

It is known that electron beam radiation has a very high processing efficiency, due to the high-power electron generator. However, electron beam has a rather limited penetration in the target object. The penetration depth s can be calculated according to Equation (1):

$$S = \frac{5,1\,E - 2,6}{\rho} \qquad (1)$$

,

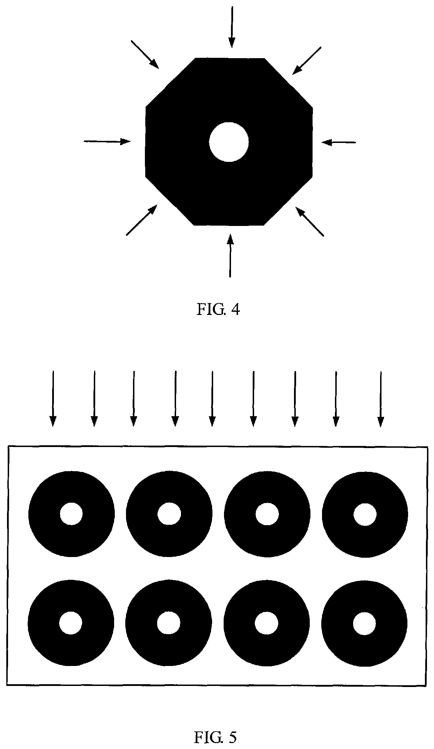

where E represents the radiation energy, and $\rho$ represents the density of the product being irradiated. The estimated penetration depth of electron beam is around 5 cm. Hence as far as electron beam radiation processing is concerned, the total thickness of roll film should be no larger than about 5 cm. In an example, rough BOPP film of a small roll was treated with electron beam radiation. In order to obtain a uniform radiation inside roll, a multistep radiation is required. For example, an octagon holder as shown in FIG. 4 may be used to fix the roll during the radiation.

In each time radiation, a small dosage was given on the roll in one direction of the octagon. Some dosimeters (size 40 mm $\times$ 40 mm $\times$ 0.08 mm) were inserted in the roll to measure the received doses at different positions (cylinder core, cylinder middle, and cylinder outside).

Gamma-ray has a much larger penetration depth than electron beam. The estimated penetration depth is over 60 cm, which enables gamma-ray to treat a big roll of commercial film, as shown in FIG. 5. As shown in FIG. 5, eight rolls are treated simultaneously and the arrows indicate the gamma ray direction. On the other hand, gamma-ray has also a drawback of low radiation processing efficiency, indicating a long radiation time and increased processing cost.

3.1. Rough BOPP film (for oil-impregnated capacitor)

The roll of rough BOPP films for electron beam treatment has a length of 320mm, an inner diameter of 90 mm, and an outer diameter of 150 mm. The roll of rough BOPP films for gamma-ray treatment has a length of 320mm, an inner diameter of 90 mm, and an outer diameter of 240 mm.

### 3.1.1. Breakdown test in air

Breakdown test on irradiated BOPP film was first carried out in air with a voltage ramp of 500 V/s. The bottom (GND) electrode was composed of a steel plate; the top electrode was made of aluminum (Al) foil (electrode area: ~2.5 cm$^2$). At least 20 individual measurements were performed for each sample. Table 2 shows the test results. It can be seen that both electron beam and gamma-ray led to a significant increase (nearly +20%) of dielectric strength. Furthermore, it was observed that the dielectric strength increased with the increase of radiation doses.

Table 2. The breakdown test results on irradiated rough film in air

|  | Film type | Radiation type | Radiation doses | AVG BD strength(V/$\mu$m) | Weibull alpha | Weibull beta | Improvement |
|---|---|---|---|---|---|---|---|
| Before radiation | First Type (Rough, 9 $\mu$m) | - | - | 648 $\pm$ 29 | 661 | 27 | - |
| After radiation | First Type (Rough, 9 $\mu$m) | Gamma-ray (Co-60) | 33 kGy | 744 $\pm$ 38 | 760 | 28 | + 14.9% |
|  |  |  | 50 kGy | 771 $\pm$ 42 | 788 | 27 | + 19.2% |
| Before radiation | Second Type (Rough, 9 $\mu$m) | - | - | 647 $\pm$ 32 | 660 | 30 | - |
| After radiation | Second Type (Rough, 9 $\mu$m) | electron beam | 33 kGy | 762 $\pm$ 38 | 777 | 31 | + 17.7% |
|  |  |  | 50 kGy | 763 $\pm$ 43 | 780 | 28 | + 18.1% |

### 3.1.2. Test on different positions

It is known that the radiation dosage will be attenuated along penetration direction when the roll film is irradiated. Hence an examination on the different positions of roll is important to identify the radiation uniformity. Table 3 shows the breakdown test results at different positions of the roll. A decreased dielectric strength was observed along the dosage attenuation direction.

Table 3. The breakdown test results at different positions of the roll

| Film type | Radiation type | Radiation doses | Position | Weibull alpha | Measured doses |
|---|---|---|---|---|---|
| First Type (Rough, 9 $\mu$m) | Gamma-ray (Co-60) | 50 KGy | Outside | 788 | - |
|  |  |  | Middle | 770 | - |
|  |  |  | Inside | 761 | - |
| Second Type (Rough, 9 $\mu$m) | electron beam | 33 kGy | Outside | 777 | 52.8 kGy |
|  |  |  | Middle | 752 | 39.3 kGy |
|  |  |  | Inside | 750 | 38.6 kGy |

### 3.1.3. Annealing test

The stability of the dielectric performance of treated film was examined by an annealing test. The annealing test was firstly performed at 70 °C for 24 hr, then at 130 °C for 2 hr. The test results are shown in Table 4. No obvious change of dielectric strength was found after the annealing treatment. The significant improvement still observed after the annealing.

Table 4. The breakdown test results on irradiated rough film after annealing test

| | Film type | Radiation type | Radiation doses | Before annealing | | After annealing | |
|---|---|---|---|---|---|---|---|
| | | | | Weibull alpha | Weibull beta | Weibull alpha | Weibull beta |
| Before radiation | First Type (Rough, 9 μm) | - | - | 661 | 27 | 668 | 27 |
| After radiation | First Type (Rough, 9 μm) | Gamma-ray (Co-60) | 50 kGy | 788 | 27 | 792 | 26 |
| Before radiation | Second Type (Rough, 9 μm) | - | - | 660 | 30 | 665 | 27 |
| After radiation | Second Type (Rough, 9 μm) | electron beam | 33 kGy | 777 | 31 | 783 | 29 |

3.1.4. Breakdown test in capacitor fluid

As it is more important for rough film to be examined in fluids than in the air, a breakdown test of treated film in capacitor fluid (blend of Monobenzyl toluene and Dibenzyl toluene) was carried out. The rough films were immersed in capacitor fluid for 72 hr for fully swelling before breakdown test. Table 5 shows the breakdown test results in the capacitor fluid. A significant increase of 20%+ dielectric strength was observed for the modified BOPP film in fluid, indicating a favorable application in oil-impregnated capacitors.

Table 5. The breakdown test results on irradiated rough film in capacitor fluid

| | Film type | Radiation type | Radiation doses | AVG BD strength(V/μm) | Weibull alpha | Weibull beta | Improvement |
|---|---|---|---|---|---|---|---|
| Before radiation | First Type (Rough, 9 μm) | - | - | 643 ± 20 | 652 | 37 | - |
| After radiation | First Type (Rough, 9 μm) | Gamma-ray | 50 kGy | 776 ± 28 | 788 | 34 | + 20.9% |
| Before radiation | Second Type (Rough, 9 μm) | - | - | 639 ± 21 | 649 | 38 | - |
| After radiation | Second Type (Rough, 9 μm) | electron beam | 33 kGy | 770 ± 24 | 782 | 36 | + 20.5% |

3.2. Smooth BOPP film (for metalized-film capacitor)

The selected roll of smooth film has a much larger size (~50kg) than rough film, and the roll has a length of 620 mm, an inner diameter of 150mm, and an outer diameter of 385mm. Table 6 shows the breakdown test results of irradiated smooth film. A considerable increase of dielectric strength was observed for the irradiated film. However, due to the large roll size of smooth film, there is wide dosage dispersity inside the roll, and the improvement of dielectric strength was not as large as the rough film accordingly.

Table 6. The breakdown test results on irradiated smooth film

| | Film thickness | Radiation doses (min.) | Average BD strength | Weibull alpha | Weibull beta | Improvement |
|---|---|---|---|---|---|---|
| Before radiation | 5.8 μm | n.a. | 617 ± 67 V/μm | 644 | 13 | - |

(continued)

|  | Film thickness | Radiation doses (min.) | Average BD strength | Weibull alpha | Weibull beta | Improvem ent | |
|---|---|---|---|---|---|---|---|
| After ra- diation | 5.8 $\mu$m | 40 kGy | Roll outside | 716 $\pm$ 56 V/$\mu$m | 740 | 16 | + 14.9% |
|  |  |  | Roll middle | 704 $\pm$ 58 V/$\mu$m | 728 | 15 | + 13.1 % |
|  |  |  | Roll inside | 694 $\pm$ 46 V/$\mu$m | 715 | 17 | + 11.0 % |

3.3. Characterization of irradiated film

A series of characterizations were performed on irradiated film so as to obtain the possible mechanism behind the performance improvement.

3.3.1. Gel content measurement

The gel content was measured on the irradiated film. An 8-hr reflux of irradiated film in xylene solvent at 140 °C was carried out before the measurement. Table 7 shows the measured gel content for BOPP film before and after the radiation. A quite similar gel content was observed for irradiated film compared with reference film, indicating that no crosslinking reaction occurred during the radiation processing.

Table 7. Gel-content measurement results on irradiated film

|  | Film type | Radiation type | Radiation doses | Gel content |
|---|---|---|---|---|
| Before radiation | First Type (Rough, 9 $\mu$m) | - | - | 6.3 % |
| After radiation | First Type (Rough, 9 $\mu$m) | Gamma-ray (Co-60) | 50 kGy | 7.2 % |
| Before radiation | Second Type (Rough, 9 $\mu$m) | - | - | 6.5 % |
| After radiation | Second Type (Rough, 9 $\mu$m) | electron beam | 33 kGy | 7.3 % |

3.3.2. MWD measurement

MWD measurement was performed on irradiated film through a GPC (gel permeation chromatography) methodology. Table 8 shows the measured results of parameters $M_w$, $M_n$, and molecular weight distribution ($M_w/M_n$). A broad MWD ($M_w/M_n$ of the first type and the second type is 5.38 and 4.58, respectively) was found for reference film. Nevertheless, a much lowered MWD was observed for the modified film after radiation. Moreover, the MWD decreased with the increase of radiation doses (the roll outside has a higher dosage than roll middle and roll inside).

Table 8. MWD measurement results on irradiated film

|  | Film type | Radiation type | Radiation doses | Position | $M_n$ | $M_w$ | $M_w/M_n$ |
|---|---|---|---|---|---|---|---|
| Before ra- diation | First Type (Rough, 9 $\mu$m) | - | - | - | 60,154 | 323,544 | 5.38 |
| After radiation | First Type (Rough, 9 $\mu$m) | Gamma-ray (Co-60) | 50 kGy | Outside | 31,504 | 72,366 | 2.30 |
|  |  |  |  | Middle | 35,423 | 110,629 | 3.12 |
|  |  |  |  | Inside | 40,921 | 148,228 | 3.62 |
| Before radiation | Second Type (Rough, 9 $\mu$m) | - | - | - | 65,855 | 301,500 | 4.58 |

(continued)

| | Film type | Radiation type | Radiation doses | Position | $M_n$ | $M_w$ | $M_w/M_n$ |
|---|---|---|---|---|---|---|---|
| After radiation | Second Type (Rough, 9 $\mu$m) | electron beam | 33 kGy | Outside | 32,907 | 91,246 | 2.77 |
| | | | | Middle | 40,165 | 117,312 | 2.92 |
| | | | | Inside | 38,111 | 145,081 | 3.81 |
| Note: $M_n$: number-average molecular weight; $M_w$: weight-average molecular weight; $M_w/M_n$: molecular weight distribution | | | | | | | |

### 3.3.3. DSC measurement

DSC measurement was performed to characterize the thermal parameters for the irradiated film. For DSC measurement, BOPP film (5-10 mg) was heated from 40 to 210 °C at a scanning rate of 10 °C/min under a nitrogen atmosphere to test its melting behavior. Table 9 shows the measured results. An increased degree of crystallinity ($X_c$) was observed for the irradiated film compared to reference film before radiation. On the other hand, a slight decrease of melting temperature ($T_m$) was also observed.

Table 9. DSC measurement results on irradiated film

| | Film type | Radiation type | Radiation doses | Position | $T_m$(°C) | $\Delta$H (J/g) | $X_c$ (%) |
|---|---|---|---|---|---|---|---|
| Before radiation | First Type (Rough, 9 $\mu$m) | - | - | - | 163.2 | 88.3 | 42.2 |
| After radiation | First Type (Rough, 9 $\mu$m) | Gamma-ray (Co-60) | 50 kGy | Outside | 160.1 | 106.6 | 51.0 |
| | | | | Middle | 160.4 | 102.2 | 48.9 |
| | | | | Inside | 160.7 | 99.1 | 47.4 |
| | | | | | | | |
| Before radiation | Second Type (Rough, 9 $\mu$m) | - | - | - | 163.3 | 87.1 | 41.7 |
| After radiation | Second Type (Rough, 9 $\mu$m) | electron beam | 33 kGy | Outside | 160.1 | 98.7 | 47.2 |
| | | | | Middle | 160.5 | 96.8 | 46.3 |
| | | | | Inside | 161.0 | 97.2 | 46.5 |
| *Note: $T_m$: the peak temperature of melting curve; $\Delta H_c$: heat of crystallization; $X_c$: degree of crystallinity. | | | | | | | |

### 3.3.4. Mechanical measurement

The mechanical strength (including tensile strength and elongation at break) of irradiated film was performed by using a universal materials testing machine. The measured data were compiled in Table 10. A slightly decreased mechanical strength and elongation rate were observed in the roll outside, while comparable mechanical property observed in the roll middle and roll inside.

Table 10. Mechanical measurement results on irradiated film

| | Film type | Radiation type | Radiation doses | Position | Tensile strength (MPa)* | Elongation at break |
|---|---|---|---|---|---|---|
| Before radiation | First Type (Rough, 9 $\mu$m) | - | - | - | 237 $\pm$ 28 | 23 $\pm$ 5 % |
| After radiation | First Type (Rough, 9 $\mu$m) | Gamma-ray (Co-60) | 50 kGy | Outside | 193 $\pm$ 20 | 22 $\pm$ 2 % |
| | | | | Middle | 239 $\pm$ 15 | 26 $\pm$ 3 % |
| | | | | Inside | 230 $\pm$ 26 | 23 $\pm$ 5 % |

(continued)

|  | Film type | Radiation type | Radiation doses | Position | Tensile strength (MPa)* | Elongation at break |
|---|---|---|---|---|---|---|
|  |  |  |  |  |  |  |
| Before radiation | Second Type (Rough, 9 $\mu$m) | - | - | - | 254 $\pm$ 28 | 29 $\pm$ 6 % |
| After radiation | Second Type (Rough, 9 $\mu$m) | electron beam | 33 kGy | Outside | 190 $\pm$ 18 | 22 $\pm$ 2 % |
|  |  |  |  | Middle | 245 $\pm$ 23 | 27 $\pm$ 3 % |
|  |  |  |  | Inside | 247 $\pm$ 14 | 29 $\pm$ 4 % |
| Note: IEC standards: Tensile strength $\geq$ 140 MPa | | | | | | |

### 3.3.5. FTIR measurement

FTIR spectra of irradiated film and the reference film show that no obvious difference was observed for BOPP film before and after radiation processing.

It was observed that the radiation processing can greatly enhance the dielectric strength of BOPP film. Furthermore, the dielectric strength has a close relationship with the radiation dosage, i.e. the dielectric strength increases with the increase of the dosage. From the results of gel-content test and MWD measurement, it can be concluded that no crosslinking but a breakdown of long polymer chains has occurred during the radiation. The molecular breakdown indicated a lowered MWD in the treated film. Hence, it is the radiation-induced narrower MWD that leads to the dielectric strength improvement. As far as the crystallization kinetics is concerned, a narrower MWD facilitates the crystallization process, as uniform and regular polymer chains can arrange into crystal lattice more easily. The experimental results have demonstrated that the irradiated film has a higher crystallinity, which indicates a crystallite reorganization and perfection (increased crystalline region and decreased amorphous region) occurred in the irradiated film, which could be the main cause of the dielectric strength improvement. It is believed that the electrical breakdown tends to occur in the amorphous regions in BOPP film. Therefore the increase in crystalline region will benefit to the dielectric strength improvement.

### 3.4. Thin Film Experiments

In order to examine the effect of radiation on thin film, an E-beam irradiation was performed on single-layer commercial film. Table 11 showed the examined results. For both smooth film and rough film, a significant increase of dielectric strength was observed after radiation, and the dielectric strength increased with the increase of radiation dosage. The results indicate that the irradiated thin film is favorable to be applied in both oil-impregnated capacitor and metallized film capacitor.

Table 11 Examination results of single-layer film after treatment by radiation

|  | Film type (single layer) | Radiation type | Radiation doses | AVG BD strength (V/$\mu$m) | Weibull alpha | Weibull beta | Improve ment |
|---|---|---|---|---|---|---|---|
| Before Radiation | Smooth film (6 $\mu$m) | - | - | 656 $\pm$52 | 678 | 17 | - |
| After Radiation | Smooth film (6 $\mu$m) | Electron beam | 33 kGy | 779 $\pm$57 | 803 | 18 | + 18.4% |
|  |  |  | 66 kGy | 787 $\pm$70 | 816 | 15 | + 20.3% |
|  |  |  |  |  |  |  |  |
| Before Radiation | Rough film (9 $\mu$m) | - | - | 647 $\pm$32 | 660 | 30 | - |
| After Radiation | Rough film (9 $\mu$m) | Electron beam | 33 kGy | 743 $\pm$49 | 762 | 25 | +15.5 % |
|  |  |  | 66 KGy | 771 $\pm$33 | 786 | 28 | + 19.1% |

Although the present disclosure has been described in language specific to structural features and/or methodological acts, it is to be understood that the scope of the present invention is defined by the appended claims.

**Claims**

1. A biaxially oriented polypropylene film (80) for use in a power capacitor, having a reduced molecular weight distribution Mw/Mn in a range of 1.5 to 4 as a result of a radiation treatment of the biaxially oriented polypropylene film (80) using ionizing radiation sources, whereby

   the molecular weight distribution Mw/Mn is defined by the quotient of the weight-average molecular weight Mw to the number-average molecular weight Mn and
   Mw and Mn are determined by gel permeation chromatography.

2. The biaxially oriented polypropylene film (80) of the preceding claim, wherein:
   the power capacitor is of an oil-immersed capacitor, or wherein:

   the power capacitor is of a dry-type metalized film capacitor; and
   the power capacitor is further obtained as a result of metalizing treatment before or after the radiation treatment.

3. The biaxially oriented polypropylene film (80) of any of the preceding claims, wherein:
   the radiation treatment uses radiation source as of an electron beam source or a gamma ray source.

4. The biaxially oriented polypropylene film (80) of any of the preceding claims, wherein:
   the molecular weight distribution Mw/Mn of the biaxially oriented polypropylene film (80) is in a range of 2 to 4, and/or wherein:
   a dosage of the radiation treatment is in a range of 1kGy to 300kGy or in a range of 10kGy to 100kGy.

5. The biaxially oriented polypropylene film (80) of any of the preceding claims is obtained by biaxially stretching a polypropylene layer before the radiation treatment.

6. A power capacitor, comprising the biaxially oriented polypropylene film (80) of any of the preceding claims.

7. A method for processing a biaxially oriented polypropylene film (80) for use in a power capacitor, comprising:

   treating the biaxially oriented polypropylene film (80) by radiation using ionizing radiation sources so as to reduce a molecular weight distribution Mw/Mn of the biaxially oriented polypropylene film (80) into a range of 1.5 to 4, whereby
   the molecular weight distribution Mw/Mn is defined by the quotient of the weight-average molecular weight Mw to the number-average molecular weight Mn and
   Mw and Mn are determined by gel permeation chromatography.

8. The method of the preceding method claim, wherein:
   the power capacitor is of an oil-immersed capacitor, or wherein:

   the power capacitor is of a dry-type metalized film capacitor;
   it further comprises:
   metalizing the biaxially oriented polypropylene film (80) before or after the radiation treatment.

9. The method of any of the preceding method claims, wherein:
   the radiation treatment uses radiation source as of an electron beam source or a gamma ray source.

10. The method of any of the preceding method claims, wherein:
    the molecular weight distribution Mw/Mn of the biaxially oriented polypropylene film (80) is in a range of 2 to 4.

11. The method of any of the preceding method claims, wherein:
    a dosage of the radiation treatment is in a range of 1kGy to 300kGy or in a range of 10kGy to 100kGy.

12. The method of any of the preceding method claims, further comprising:
    bi-axially stretching a polypropylene layer before the radiation treatment.

13. A manufacturing method, comprising:

the method for processing the biaxially oriented polypropylene film according to the preceding claim, and; winding up the radiation-treated biaxially oriented polypropylene film (80) into a shape of roll; wherein: a radiation source (70) of the radiation treatment is configured to move substantially parallel to an axial direction of the winding.

14. A system for processing a biaxially oriented polypropylene film (80) for use in a power capacitor, comprising:

a radiation source (70) configured to treat the biaxially oriented polypropylene film (80) by radiation using ionizing radiation sources so as to reduce a molecular weight distribution Mw/Mn of the biaxially oriented polypropylene film (80) into a range of 1.5 to 4, whereby the molecular weight distribution Mw/Mn is defined by the quotient of the weight-average molecular weight Mw to the number-average molecular weight Mn and Mw and Mn are determined by gel permeation chromatography.

15. A manufacturing system (200), comprising:

the system for processing the biaxially oriented polypropylene film (80) according to the preceding claim; and at least one roller (130) configured to wind up the radiation-treated biaxially oriented polypropylene film (80) into a shape of roll; wherein the radiation source (70) is configured to move substantially parallel to an axial direction of the at least one roller (130).

**Patentansprüche**

1. Biaxial orientierte Polypropylenfolie (80) zur Verwendung in einem Leistungskondensator, der als ein Ergebnis einer Strahlenbehandlung der biaxial orientierten Polypropylenfolie (80) unter Verwendung von Quellen ionisierender Strahlung eine reduzierte Molekulargewichtsverteilung Mw/Mn in einem Bereich von 1,5 bis 4 aufweist, wobei

die Molekulargewichtsverteilung Mw/Mn durch den Quotienten des gewichtsmittleren Molekulargewichts Mw und des zahlenmittleren Molekulargewichts Mn definiert ist und Mw und Mn durch Gelpermeationschromatographie bestimmt werden.

2. Biaxial orientierte Polypropylenfolie (80) nach dem vorhergehenden Anspruch, wobei: der Leistungskondensator ein ölgekapselter Kondensator ist, oder wobei:

der Leistungskondensator ein Metallfolien-Trockenkondensator ist; und der Leistungskondensator ferner im Ergebnis einer Metallisierungsbehandlung vor oder nach der Strahlenbehandlung erhalten wird.

3. Biaxial orientierte Polypropylenfolie (80) nach einem der vorhergehenden Ansprüche, wobei: die Strahlenbehandlung eine Strahlenquelle wie eine Elektronenstrahlenquelle oder eine Gammastrahlenquelle nutzt.

4. Biaxial ausgerichtete Polypropylenfolie (80) nach einem der vorhergehenden Ansprüche, wobei: die Molekulargewichtsverteilung Mw/Mn der biaxial orientierten Polypropylenfolie (80) in einem Bereich von 2 bis 4 liegt, und/oder wobei: eine Dosis der Strahlenbehandlung in einem Bereich von 1 kGy bis 300 kGy oder in einem Bereich von 10 kGy bis 100 kGy liegt.

5. Biaxial orientierte Polpropylenfolie (80) nach einem der vorhergehenden Ansprüche, erhalten durch biaxiales Dehnen einer Polypropylenschicht vor der Strahlenbehandlung.

6. Leistungskondensator, umfassend die biaxial orientierte Polypropylenfolie (80) nach einem der vorhergehenden Ansprüche.

7. Verfahren zum Verarbeiten einer biaxial orientierten Polypropylenfolie (80) zur Verwendung in einem Leistungskondensator, umfassend:

Behandeln der biaxial orientierten Polypropylenfolie (80) mittels Strahlung unter Verwendung ionisierender Strahlenquellen, um eine Molekulargewichtsverteilung Mw/Mn der biaxial orientierten Polypropylenfolie (80) auf einen Bereich von 1,5 bis 4 zu reduzieren, wobei
die Molekulargewichtsverteilung Mw/Mn durch den Quotienten des gewichtsmittleren Molekulargewichts Mw und des zahlenmittleren Molekulargewichts Mn definiert ist und
Mw und Mn durch Gelpermeationschromatographie bestimmt werden.

8. Verfahren nach dem vorhergehenden Verfahrensanspruch, wobei:
der Leistungskondensator ein ölgekapselter Kondensator ist oder wobei:

der Leistungskondensator ein Metallfolien-Trockenkondensator ist;
es ferner umfasst:
Metallisieren der biaxial orientierten Polypropylenfolie (80) vor oder nach der Strahlenbehandlung.

9. Verfahren nach einem der vorhergehenden Verfahrensansprüche, wobei:

die Strahlenbehandlung eine Strahlenquelle wie eine Elektronenstrahlenquelle oder
eine Gammastrahlenquelle nutzt.

10. Verfahren nach einem der vorhergehenden Verfahrensansprüche, wobei:
die Molekulargewichtsverteilung Mw/Mn der biaxial orientierten Polypropylenfolie (80) im Bereich von 2 bis 4 liegt.

11. Verfahren nach einem der vorhergehenden Verfahrensansprüche, wobei:
eine Dosis der Strahlenbehandlung in einem Bereich von 1 kGy bis 300 kGy oder in einem Bereich von 10 kGy bis 100 kGy liegt.

12. Verfahren nach einem der vorangehenden Verfahrensansprüche, ferner umfassend:
biaxiales Dehnen einer Polypropylenschicht vor der Strahlenbehandlung.

13. Herstellungsverfahren, umfassend:

das Verfahren zum Verarbeiten der biaxial orientierten Polypropylenfolie nach dem vorhergehenden Anspruch, und
Aufwickeln der strahlenbehandelten, biaxial orientierten Polypropylenfolie (80) in eine Form einer Rolle, wobei eine Strahlenquelle (70) der Strahlenbehandlung dazu konfiguriert ist, sich im Wesentlichen parallel zu einer axialen Richtung der Wicklung zu bewegen.

14. System zum Verarbeiten einer biaxial orientierten Polypropylenfolie (80) zur Verwendung in einem Leistungskondensator, umfassend:

eine Strahlenquelle (70), konfiguriert zum Behandeln der biaxial orientierten Polypropylenfolie (80) mittels Strahlung unter Verwendung ionisierender Strahlenquellen, um die Molekulargewichtsverteilung Mw/Mn der biaxial orientierten Polypropylenfolie (80) auf einen Bereich von 1,5 bis 4 zu reduzieren, wobei
die Molekulargewichtsverteilung Mw/Mn durch den Quotienten des gewichtsmittleren Molekulargewichts Mw und des zahlenmittleren Molekulargewichts Mn definiert ist und
Mw und Mn durch Gelpermeationschromatographie bestimmt werden.

15. Herstellungssystem (200), umfassend:

das System zum Verarbeiten der biaxial orientierten Polypropylenfolie (80) nach dem vorhergehenden Anspruch; und
mindestens eine Rolle (130), konfiguriert zum Aufwickeln der strahlenbehandelten, biaxial orientierten Polypropylenfolie (80) in eine Form einer Rolle, wobei
die Strahlenquelle (70) dazu konfiguriert ist, sich im Wesentlichen parallel zu einer axialen Richtung der mindestens einen Rolle (130) zu bewegen.

**EP 3 732 698 B1**

**Revendications**

1. Film de polypropylène à orientation biaxiale (80) pour une utilisation dans un condensateur de puissance, ayant une distribution de masse moléculaire réduite Mw/Mn dans une plage de 1,5 à 4 conséquemment à un traitement par rayonnements du film de polypropylène à orientation biaxiale (80) en utilisant des sources de rayonnements ionisants, moyennant quoi

   la distribution de masse moléculaire Mw/Mn est définie par le quotient de la masse moléculaire moyenne en poids Mw sur la masse moléculaire moyenne en nombre Mn et
   Mw et Mn sont déterminées par chromatographie à perméation de gel.

2. Film de polypropylène à orientation biaxiale (80) selon la revendication précédente, dans lequel :
   le condensateur de puissance est un condensateur plongé dans l'huile, ou dans lequel :

   le condensateur de puissance est un condensateur à film métallisé de type sec ; et
   le condensateur de puissance est en outre obtenu conséquemment à un traitement métallisant avant ou après le traitement par rayonnements.

3. Film de polypropylène à orientation biaxiale (80) selon l'une quelconque des revendications précédentes, dans lequel :
   le traitement par rayonnements utilise une source de rayonnements telle qu'une source de faisceau d'électrons ou une source de rayons gamma.

4. Film de polypropylène à orientation biaxiale (80) selon l'une quelconque des revendications précédentes, dans lequel :
   la distribution de masse moléculaire Mw/Mn du film de polypropylène à orientation biaxiale (80) est dans une plage de 2 à 4, et/ou dans lequel :
   une dose du traitement par rayonnements est dans une plage de 1 kGy à 300 kGy ou dans une plage de 10 kGy à 100 kGy.

5. Film de polypropylène à orientation biaxiale (80) selon l'une quelconque des revendications précédentes qui est obtenu par étirage biaxial d'une couche de polypropylène avant le traitement par rayonnements.

6. Condensateur de puissance, comprenant le film de polypropylène à orientation biaxiale (80) selon l'une quelconque des revendications précédentes.

7. Procédé de traitement d'un film de polypropylène à orientation biaxiale (80) pour une utilisation dans un condensateur de puissance, comprenant l'étape consistant à :

   traiter le film de polypropylène à orientation biaxiale (80) par rayonnements en utilisant des sources de rayonnements ionisants de manière à réduire une distribution de masse moléculaire Mw/Mn du film de polypropylène à orientation biaxiale (80) dans une plage de 1,5 à 4, moyennant quoi
   la distribution de masse moléculaire Mw/Mn est définie par le quotient de la masse moléculaire moyenne en poids Mw sur la masse moléculaire moyenne en nombre Mn et
   Mw et Mn sont déterminées par chromatographie à perméation de gel.

8. Procédé selon l'une des revendications de procédé précédentes, dans lequel :
   le condensateur de puissance est un condensateur plongé dans l'huile, ou dans lequel :

   le condensateur de puissance est un condensateur à film métallisé de type sec ;
   il comprend en outre une étape consistant à :
   métalliser le film de polypropylène à orientation biaxiale (80) avant ou après le traitement par rayonnements.

9. Procédé selon l'une quelconque des revendications de procédé précédentes, dans lequel :
   le traitement par rayonnements utilise une source de rayonnements telle qu'une source de faisceau d'électrons ou une source de rayons gamma.

10. Procédé selon l'une quelconque des revendications de procédé précédentes, dans lequel :

14

la distribution de masse moléculaire Mw/Mn du film de polypropylène à orientation biaxiale (80) est dans une plage de 2 à 4.

11. Procédé selon l'une quelconque des revendications de procédé précédentes, dans lequel :
une dose du traitement par rayonnements est dans une plage de 1 kGy à 300 kGy ou dans une plage de 10 kGy à 100 kGy.

12. Procédé selon l'une quelconque des revendications de procédé précédentes, comprenant en outre une étape consistant à :
étirer de manière biaxiale une couche de polypropylène avant le traitement par rayonnements.

13. Procédé de fabrication, comprenant :

le procédé de traitement du film de polypropylène à orientation biaxiale selon la revendication précédente, et l'étape consistant à ;
enrouler le film de polypropylène à orientation biaxiale (80) traité par rayonnements en forme de rouleau ; dans lequel :
une source de rayonnements (70) du traitement par rayonnements est conçue pour se déplacer de manière essentiellement parallèle à une direction axiale de l'enroulement.

14. Système de traitement d'un film de polypropylène à orientation biaxiale (80) pour une utilisation dans un condensateur de puissance, comprenant :

une source de rayonnements (70) conçue pour traiter le film de polypropylène à orientation biaxiale (80) par rayonnements en utilisant des sources de rayonnements ionisants de manière à réduire une distribution de masse moléculaire Mw/Mn du film de polypropylène à orientation biaxiale (80) dans une plage de 1,5 à 4, moyennant quoi
la distribution de masse moléculaire Mw/Mn est définie par le quotient de la masse moléculaire moyenne en poids Mw sur la masse moléculaire moyenne en nombre Mn et
Mw et Mn sont déterminées par chromatographie à perméation de gel.

15. Système de fabrication (200), comprenant :

le système de traitement du film de polypropylène à orientation biaxiale (80) selon la revendication précédente ; et
au moins un rouleau (130) conçu pour enrouler le film de polypropylène à orientation biaxiale (80) traité par rayonnements en forme de rouleau ; dans lequel
la source de rayonnements (70) est conçue pour se déplacer de manière essentiellement parallèle à une direction axiale de l'au moins un rouleau (130).

100

120

BI-AXIALLY STRETCH A POLYPROPYLENE LAYER

140

TREAT THE BOPP FILM BY RADIATION

FIG. 1

40

GENERATOR

200

80

10

20

30

FIG. 2A

FIG. 2B

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2410539 A1
- JP 2010219329 A

- FR 2511692 A1